# FASCICULE DE BREVET EUROPEEN

(11) **EP 3 538 259 B1**
(45) Date de publication et mention de la délivrance du brevet: **25.11.2020**
(21) Numéro de dépôt: 17821994.5
(22) Date de dépôt: 14.12.2017
(51) Int. Cl.: B01J 19/18, B01J 3/00

(54) **RÉACTEUR POUR LE TRAITEMENT PAR OXYDATION HYDROTHERMALE D'UNE MATIÈRE ORGANIQUE DANS UN MILIEU RÉACTIONNEL**
REAKTOR ZUR HYDROTHERMALEN OXIDATIONSBEHANDLUNG EINES ORGANISCHEN STOFFES IN EINEM REAKTIONSMEDIUM
REACTOR FOR THE HYDROTHERMAL OXIDATION TREATMENT OF AN ORGANIC MATERIAL IN A REACTION MEDIUM

(30) Priorité: 16.12.2016 FR 1662611
(43) Date de publication de la demande: 18.09.2019
(73) Titulaire: Commissariat à l'énergie atomique et aux énergies alternatives, 75015 Paris (FR)
(72) Inventeur: RUIZ, Jean-Christophe, 30290 Laudun L'Ardoise (FR); TURC, Hubert-Alexandre, 30133 Les Angles (FR); LEYBROS, Antoine, 30200 Bagnols sur Ceze (FR)
(74) Mandataire: Brevalex
(86) Numéro de dépôt international: PCT/FR2017/053558
(87) Numéro de publication internationale: WO 2018/109390

(56) Documents cités:
- WO-A1-93/02969
- WO-A1-2007/036512
- CN-A- 102 659 232
- FR-A1- 2 814 967

## Description

### DOMAINE TECHNIQUE

Le domaine de l'invention est celui du traitement par oxydation hydrothermale ou par voie humide d'une matière organique.

L'invention trouve notamment application à la destruction de matières organiques telles que des déchets industriels dangereux liquides tels que, par exemple, des solvants halogénés, des effluents organiques toxiques, des effluents pharmaceutiques, biologiques ou contaminés, et/ou de déchets industriels dangereux solides (par exemple des Résines Echangeuses d'Ions (REI)).

### ÉTAT DE LA TECHNIQUE ANTÉRIEURE

L'Oxydation HydroThermale (OHT) et l'Oxydation par Voie Humide (OVH) permettent, au moyen d'eau pressurisée et en température, et en présence d'un oxydant, la décomposition totale ou partielle de matières organiques (comme par exemple des effluents organiques halogénés ou non, de fort Pouvoir Calorifique Inférieur (PCI) ou non). L'oxydant peut être de l'air, de l'oxygène pur, sous forme gazeuse ou bien liquide, ou bien encore, par exemple, de l'eau oxygénée (peroxyde d'hydrogène).

Le mélange de l'oxydant et de l'eau, solubilisant la matière organique, s'effectue dans un réacteur (également appelé autoclave) maintenu à une température située entre 400 et 550°C pour l'OHT, formant alors un mélange homogène monophasique. C'est dans ces conditions que la matière organique est oxydée. Dans le cas de l'OVH, le réacteur est maintenu à une température inférieure à la température critique de l'eau (374°C), généralement entre 150 et 325°C, et à une pression comprise entre 20 et 175 bars.

La technique de l'oxydation en milieu supercritique a tout d'abord été mise en œuvre au sein d'un réacteur ayant une simple géométrie tubulaire. Cette géométrie s'est avérée efficace du point de vue réactionnel, mais très limitée lors du traitement de composés halogénés en raison de phénomènes de corrosion se produisant au niveau des parois, ainsi que du dépôt de composés minéraux provoquant la formation de bouchons.

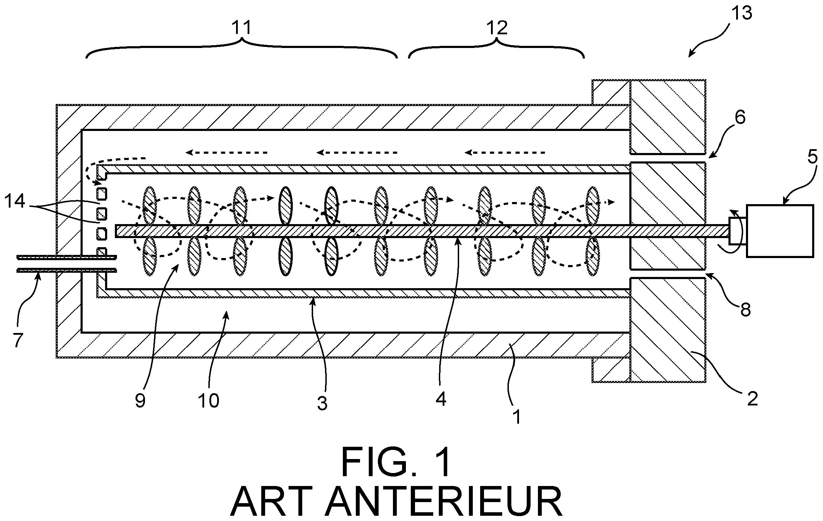

Pour résoudre ces problèmes de corrosion et d'accumulation des sels, il a été proposé (documents [1][2][3] et [4]) l'utilisation d'un réacteur continu à double enveloppe agité, illustré dans la figure 1.

Le réacteur 13 comporte un corps principal 1 de forme tubulaire, borgne et résistant à la pression et à la température opératoires, qui est fermé par une bride d'étanchéité 2 maintenue froide par un refroidissement actif. Le corps principal 1 du réacteur présente deux zones bien distinctes, à savoir une zone maintenue à température opératoire 11 par des moyens de chauffage indépendants et une zone maintenue froide 12 par des moyens de refroidissement indépendants.

Un tube interne 3 est situé à l'intérieur du corps principal 1 et est maintenu étanche au niveau de la bride froide 2. Ce tube interne 3 délimite une zone réactionnelle 9, située à l'intérieur du tube interne, et une zone annulaire 10, comprise entre l'extrados du tube interne et la paroi interne du corps principal 1. Le tube interne 3 met en communication fluidique, du côté de la zone chaude (température opératoire), la zone réactionnelle 9 avec la zone annulaire 10 par le biais d'au moins une ouverture 14.

Le tube interne 3 n'est pas soumis à une contrainte mécanique de pression et confine la réaction d'OHT ou d'OVH dans la zone réactionnelle 9. Ce confinement se fait à la fois de manière statique, du fait de la présence du tube interne 3 qui forme un écran pour la zone réactionnelle 9, et de manière dynamique, du fait de la circulation des fluides au cours du fonctionnement du réacteur. Ce tube interne 3 est conçu pour résister aux agressions chimiques induites par la réaction et peut être facilement remplacé par le démontage de son accouplement sur la bride froide 2. Ce tube interne fait également fonction d'échangeur de chaleur à contre-courant entre les réactifs à préchauffer (oxydant + eau) et les fluides chauds issus de la zone réactionnelle. Ainsi, les réactifs nécessaires à la réaction d'OHT ou d'OVH (oxydant + eau) sont alimentés au débit opératoire via la bride froide 2 et circulent dans la zone annulaire 10 jusqu'à l'extrémité chaude du réacteur, pour ensuite pénétrer dans la zone réactionnelle 9. A cet endroit, les réactifs (oxydant + eau) rencontrent les matières organiques qui sont injectées au débit opératoire au niveau d'une alimentation tubulaire simple 7 située à l'extrémité chaude du réacteur. La matière traitée sort de la zone réactionnelle par une sortie 8.

Un moyen d'agitation équivalent à une turbine 4, comprenant un arbre muni de pales, est situé dans le tube interne. L'arbre est mis en rotation par une motorisation électrique externe 5. Le moyen d'agitation permet d'homogénéiser le milieu réactionnel et facilite les transferts thermiques entre la zone réactionnelle 9 et la paroi du tube interne 3. La turbine 4, tout comme le tube interne 3, sont réalisés dans un matériau résistant aux agressions chimiques induites par la réaction et aux gradients de températures axiaux le long du réacteur. Ce moyen d'agitation peut être aisément remplacé en démontant la bride froide 2.

Il y a également des moyens de chauffage et des moyens de refroidissement réalisés :
- à l'extérieur du corps principal 1 du réacteur et à pression atmosphérique, par le biais de résistances chauffantes (par exemple, des colliers chauffants) ou de doubles enveloppes de circulation d'eau glacée (documents **[1]** et **[2]**) ;
- à l'intérieur du corps principal 1 du réacteur, à la pression opératoire, par le biais de résistances ou de circuits de fluides caloporteurs immergés dans la zone annulaire et suffisamment proches de la zone réactionnelle, tout en étant protégés des agressions par le tube interne 3 (document **[3]**).

Ces réacteurs de l'art antérieur peuvent toutefois encore être améliorés. Ces réacteurs présentent notamment les limitations suivantes.

L'utilisation d'un tube interne 3 implique la présence d'une zone annulaire en quasi-équipression avec la zone réactionnelle 9. Cette configuration permet de délimiter un volume protégé des agressions chimiques induites par la réaction d'OHT ou d'OVH. Ce volume est parcouru par un fluide composé d'eau et d'oxydant (également appelé « fluide procédé »), qui est réchauffé par échange de chaleur avec le fluide issu de la réaction, d'une part (en intrados du tube interne), et par les moyens de chauffage indépendants, d'autre part (colliers chauffants externes à la paroi du corps principal 1 du réacteur). Dans les documents **[1], [2]** et **[3],** le fluide procédé est utilisé comme un fluide caloporteur, qui permet un transfert de chaleur depuis l'extrados du tube interne vers la surface d'un échangeur de chaleur plongé dans la zone annulaire ou vers la surface de la paroi du corps principal du réacteur.

L'écoulement de ce fluide procédé s'effectue à un débit d'alimentation requis par les besoins de la réaction d'OHT ou d'OVH, ce qui peut conduire à un écoulement très faiblement turbulent. D'autre part, si dans les conditions de températures supercritiques de l'eau, celle-ci et l'oxydant éventuellement gazeux, tel que l'air ou le dioxygène, forment un mélange homogène, il n'en est pas de même dans les conditions de températures sous critiques rencontrées dans la zone froide du réacteur. Il n'est donc pas exclu qu'une séparation des phases liquide et gazeuse ait lieu dans la zone annulaire à basse température, conduisant à une stratification de l'écoulement, la phase aqueuse se plaçant en partie inférieure et la phase gazeuse en partie supérieure. Il serait donc souhaitable de pouvoir agir sur le régime de l'écoulement dans la zone annulaire, indépendamment du débit d'alimentation requis par la réaction.

Par ailleurs, la connectique utilisée pour alimenter le réacteur en matière organique à décomposer (déchet froid) subit, dans les conditions opératoires de pression et de température, des contraintes mécaniques, auxquelles s'ajoutent des cycles de température lors des phases de démarrage et de mise à l'arrêt du réacteur. Il est donc nécessaire, si l'on veut conserver une bonne étanchéité au cours du temps, de changer cette connectique régulièrement.

D'autre part, les débits d'alimentation en déchet froid étant relativement faibles par rapport aux autres flux entrant et sortant du réacteur, cette alimentation est généralement réalisée en utilisant une tubulure de diamètre très faible. Or, l'oxydant n'étant généralement pas présent dans cette tubulure, elle est sujette au colmatage par pyrolyse du déchet.

Le concept du réacteur continu à double enveloppe agité a été largement utilisé pour diverses applications en continu ou en semi-continu d'OVH et d'OHT. Certaines applications impliquant des composés comportant des hétéroatomes tels que S, P, CI peuvent occasionner, dans des conditions de fonctionnement de longue durée, des dommages significatifs pour le tube interne 3 et le moyen d'agitation 4, et plus particulièrement sur une région localisée sur l'arbre du moyen d'agitation, située dans une zone dite de transition supercritique/sous-critique. Les efforts de flexion subis par le moyen d'agitation sont en outre importants dans cette région particulière. Cette région de l'arbre fait donc l'objet d'une combinaison d'effets mécaniques, thermohydrauliques, voire thermogalvaniques, qui s'ajoutent aux phénomènes de corrosion généralisée classique et de corrosion sous dépôts. Cette combinaison induit une faiblesse du dispositif, qui peut conduire à des maintenances plus fréquentes dans certaines conditions opératoires.

### EXPOSÉ DE L'INVENTION

L'invention vise à améliorer un réacteur continu à double enveloppe agité de l'art antérieur, notamment en permettant un contrôle du régime d'écoulement dans le cœur du réacteur, indépendamment du débit d'alimentation en eau (milieu réactionnel) et oxydants froids (air, oxygène pur,..).

Pour cela, l'invention vise notamment à améliorer l'efficacité des transferts thermiques (chauffe et refroidissement) en agissant sur l'agitation du milieu réactionnel, ainsi que sur l'introduction du déchet dans la zone réactionnelle.

Ainsi, l'invention concerne un réacteur pour le traitement par oxydation hydrothermale d'une matière organique dans un milieu réactionnel (qui peut être un milieu supercritique), comprenant :
- un corps principal s'étendant selon un axe longitudinal, étant muni à une première de ses extrémités d'une bride d'interface froide, des moyens d'étanchéité étant disposés entre le corps principal et la bride ;
- un tube interne placé à l'intérieur du corps principal de manière à former une zone annulaire le long du corps principal, le tube interne comprenant une première extrémité froide en contact de manière étanche avec la bride froide, et une deuxième extrémité chaude, le tube interne délimitant une zone intérieure réactionnelle qui est en communication fluidique avec la zone annulaire par le biais d'au moins une ouverture disposée dans l'extrémité chaude du tube interne ;
- un moyen d'agitation pour réaliser un brassage du milieu réactionnel situé dans la zone intérieure réactionnelle du tube interne, ledit moyen d'agitation étant monté rotatif autour de l'axe longitudinal;
- un moyen de réfrigération pour refroidir un effluent (qui contient la matière organique traitée) se trouvant dans la zone intérieure réactionnelle du tube interne avant son évacuation du réacteur par une sortie du corps principal ;
- une entrée pour un mélange eau et oxydant située du côté de la première extrémité froide du corps principal, le mélange eau et oxydant parcourant la zone annulaire de la première extrémité froide à la deuxième extrémité chaude du tube interne, avant de pénétrer dans la zone intérieure réactionnelle du tube interne ;
- une sortie d'effluents située au niveau de la première extrémité froide du corps principal ;
- un moyen d'injection pour injecter la matière organique à traiter dans le tube interne ;
le réacteur étant caractérisé en ce que le tube interne est monté rotatif sur la bride froide, de manière à être entrainé en rotation autour de l'axe longitudinal ;
en ce que le moyen d'injection comporte un fourreau, placé à l'intérieur du tube interne, ledit fourreau ayant une première extrémité qui est fixée de manière étanche à la bride froide et une deuxième extrémité qui est située à proximité de l'extrémité chaude du tube interne, le fourreau ayant en outre un alésage qui définit un passage de la matière organique à traiter de la première extrémité jusqu'à la deuxième extrémité du fourreau ; et
en ce que le moyen d'agitation comprend une pluralité de pales fixées sur la paroi interne du tube interne et espacées les unes des autres selon une direction longitudinale du tube interne, les pales étant entrainées en rotation par la rotation du tube interne, et une pluralité de contre pales fixées sur la paroi externe du fourreau et espacées les unes des autres selon une direction longitudinale du fourreau.

Il est à noter que le contact entre la première extrémité froide du tube interne et la bride froide est un contact permettant à la fois l'étanchéité et la rotation du tube interne, puisque le tube interne est monté étanche avec la bride froide, mais doit également pouvoir tourner.

Les pales et les contre pales du moyen d'agitation permettent d'améliorer le cisaillement du fluide agité contenu dans la zone réactionnelle.

Certains aspects préférés mais non limitatifs de ce réacteur sont les suivants.

Avantageusement, le moyen d'agitation comprend en outre un arbre tournant qui est disposé dans la zone intérieure réactionnelle du tube interne et qui traverse la bride froide, l'arbre tournant étant logé dans l'alésage du fourreau du moyen d'injection. Le diamètre interne de l'alésage et le diamètre externe de l'arbre tournant sont bien entendu choisi de manière à permettre le passage de la matière organique à traiter de la première extrémité jusqu'à la deuxième extrémité du fourreau. Dans cette configuration préférée de l'invention, on a à la fois une agitation de la zone réactionnelle, de la zone annulaire et du passage de la matière organique dans l'alésage du fourreau.

Selon l'invention, le tube interne est monté rotatif autour de l'axe longitudinal du corps principal et appartient au moyen de rotation. Lorsque le moyen de rotation comporte en outre un arbre tournant, différentes configurations sont possibles. La rotation du tube interne et celle de l'arbre tournant peuvent être indépendantes, chacun étant entrainé en rotation autour de l'axe longitudinal par sa propre motorisation. On peut également utiliser une seule motorisation pour entrainer en rotation à la fois le tube interne et l'arbre tournant en la reliant soit au tube interne, soit à l'arbre tournant et en rendant l'arbre tournant solidaire du tube interne.

Le moyen d'agitation peut comprendre en outre une pluralité de pales fixées sur la paroi externe du tube interne et espacées les unes des autres selon la direction longitudinale du tube interne. Cela permet d'agir sur le régime de l'écoulement dans la zone annulaire, indépendamment du débit d'alimentation requis par la réaction d'OHT ou d'OVH.

Le fourreau peut comporter en outre, sur sa paroi externe, au moins un disque faisant saillie radialement. Cela permet de diviser le volume réactionnel en une succession d'au moins deux réacteurs élémentaires parfaitement agités, dont l'écoulement moyen tend vers l'écoulement piston.

Le moyen de réfrigération peut comporter un échangeur de chaleur formant un radiateur de boucle froide, cet échangeur de chaleur étant disposé dans la zone annulaire à proximité, de préférence en contact, de la bride froide. Cela permet de refroidir l'effluent de la zone réactionnel en limitant les résistances au transfert thermique entre cet effluent et la boucle froide.

Le réacteur peut comprendre en outre une pluralité de doigts de gant, disposés dans la zone annulaire et traversant la bride froide. Ces doigts de gants permettent d'approcher au plus près de la zone réactionnelle, en assurant un transfert thermique maximal entre cette zone réactionnelle et ces doigts de gants. On peut en outre insérer dans ces doigts de gants différents dispositifs qui vont aider à la conduite (fourniture ou extraction de puissance thermique localisée) et à la surveillance (instrumentation de suivi de températures localisées) de la réaction d'OHT ou d'OVH. Dans ces deux cas, on entend par « localisée » une localisation longitudinale selon l'axe de la zone réactionnelle, le long de laquelle les besoins en échange de puissance thermique et la précision de la mesure de température diffèrent. Les doigts de gants peuvent ainsi être pourvus de cartouches chauffantes permettant d'injecter de la puissance thermique sur une portion définie de la longueur de la zone réactionnelle, ou bien encore être munies de dispositifs de mesure permettant de mesurer un ou plusieurs points de température à des positions précises le long de la zone réactionnelle.

L'échangeur de chaleur formant un radiateur de boucle froide peut être un élément annulaire qui est coaxial avec le tube interne. Cet élément annulaire peut être muni de canaux, chaque canal définissant un passage pour un doigt de gant; cette configuration présente l'avantage d'être compacte, tout en permettant de maintenir froide l'extrémité des doigts de gant qui est raccordée à la bride froide (cela permet une limitation des ponts thermiques et une protection de la bride froide).

Le réacteur peut comprendre en outre un échangeur de chaleur formant un radiateur de boucle chaude, obtenu par une circulation d'un fluide caloporteur au contact de la paroi externe du corps principal. Cet échangeur de chaleur formant un radiateur de boucle chaude peut par exemple être formé par au moins une rainure pratiquée dans la paroi externe du corps principal et dans laquelle on fait circuler un fluide caloporteur. Il peut également s'agir d'un serpentin, dans lequel on fait circuler un fluide caloporteur. De préférence, la rainure ou le serpentin s'étend sur une surface de la paroi externe du corps principal du réacteur allant au moins de la deuxième extrémité chaude du corps principal au droit du moyen de réfrigération ; la rainure ou le serpentin peut par exemple s'étendre hélicoïdalement autour de l'axe longitudinal du corps principal ou bien encore s'étendre longitudinalement par rapport à l'axe longitudinal du corps principal en faisant des allers/retours successifs.

Le moyen d'agitation peut comprendre en outre une pièce à géométrie annulaire munie d'un alésage, qui est coaxial avec l'alésage du fourreau et qui définit un passage pour l'arbre tournant, ainsi qu'une contre pale fixe qui relie la pièce à la deuxième extrémité du fourreau. La pièce a de préférence un diamètre externe identique, à un jeu de glissement près, à celui du fourreau, cette pièce jouant le rôle de palier d'appui en rotation.

Le réacteur peut comprendre en outre une double enveloppe, qui est maintenue à une pression inférieure ou égale à 300 mbar (la double enveloppe est donc maintenue sous vide primaire ou sous forte dépression) et qui est disposée autour du corps principal (qui est porté à haute température) et en contact avec la bride froide. Cette double enveloppe joue le rôle d'un calorifuge. Cela est rendu possible par le fait que connectiques d'alimentation et d'évacuation de fluides ont été reportées sur la bride froide. Cette double enveloppe permet une rupture de pont thermique autour de la zone chaude du corps principal et peut également former une isolation thermique de cette zone chaude.

Le tube interne peut comporter une pluralité d'ouvertures disposées dans l'extrémité chaude du tube interne.

L'invention présente de nombreux avantages. Les améliorations apportées permettent notamment :
- de pouvoir, à volume réactionnel donné, augmenter de manière significative la capacité de traitement en continu de la matière organique de faible à fort PCI ;
- d'extraire efficacement la puissance thermique dégagée par la réaction d'oxydation de la matière organique pour la transférer vers un circuit secondaire et la valoriser ;
- d'améliorer les possibilités d'instrumentation au plus près de la réaction ;
- de permettre le contrôle thermique de l'OHT indépendamment des conditions d'alimentation en fluide procédé ;
- d'assurer un refroidissement efficace et en continu des produits de la réaction d'OHT ;
- d'augmenter la disponibilité de l'équipement en diminuant le temps nécessaire à la maintenance (notamment, les changements nécessaires du tube interne et du moyen d'agitation sont moins fréquents).

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1, déjà décrite, représente une vue en coupe d'un réacteur continu à double enveloppe agité selon l'art antérieur ;
- la figure 2 représente une vue en coupe d'un mode de réalisation d'un réacteur selon l'invention ;
- la figure 3 représente une vue en coupe selon la ligne A-A de la figure 2 ;
- la figure 4 représente, selon une vue en coupe, un détail de la figure 2, dans lequel on peut apercevoir un doigt de gant 37 dans une configuration adaptée pour la réalisation d'une extraction de puissance thermique de la zone chaude, au moyen d'une épingle de refroidissement 47.

### EXPOSÉ DÉTAILLÉ DE MODES DE RÉALISATION PARTICULIERS

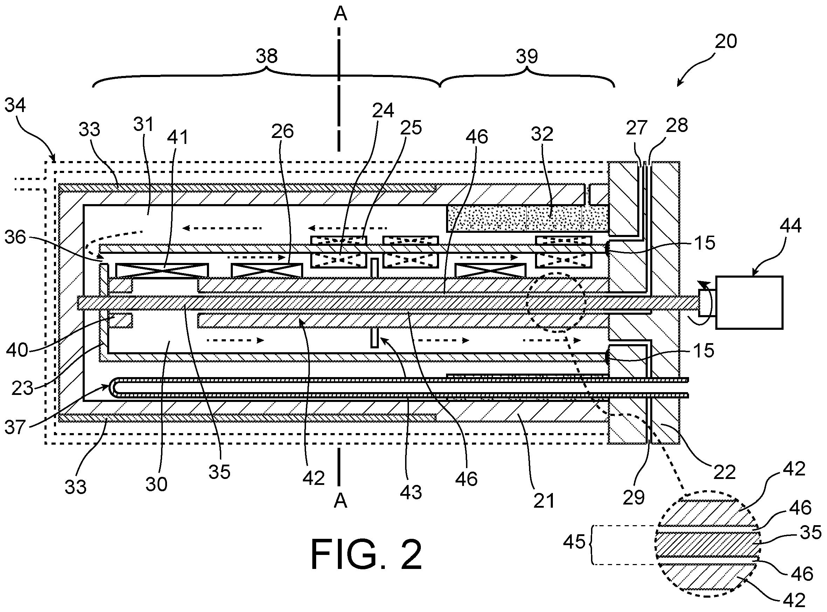

On a représenté sur la figure 2 une vue schématique d'un réacteur selon un mode de réalisation préféré de l'invention.

Le réacteur 20 comporte :
- un corps principal 21 longitudinal muni à une première de ses extrémités d'une bride d'interface froide 22, des moyens d'étanchéité (non représentés) étant disposés entre le corps principal 21 et la bride 22 ;
- un tube interne 23 placé à l'intérieur du corps principal 21 de manière à former une zone annulaire 31 le long du corps principal, le tube interne 23 comprenant une première extrémité froide en contact de manière étanche avec la bride froide 22, et une deuxième extrémité chaude, le tube interne 23 délimitant une zone intérieure réactionnelle 30 qui est en communication fluidique avec la zone annulaire 31 par le biais d'au moins une ouverture 36 disposée dans l'extrémité chaude du tube interne 23 ;
- un moyen d'agitation pour réaliser un brassage du milieu réactionnel situé dans la zone intérieure réactionnelle 30 du tube interne 23, ledit moyen d'agitation étant entrainé en rotation par l'intermédiaire d'un arbre tournant 35 disposé dans la zone intérieure réactionnelle 30 du tube interne 23 et traversant la bride froide 22, qui est mis en rotation par un actionneur 44 ;
- un moyen de réfrigération 32, qui se trouve dans la zone annulaire 31 au contact de la bride froide 22, qui permet de refroidir un effluent présent dans la zone réactionnelle 30 avant son évacuation du réacteur par la sortie 29;
- une entrée 27 pour un mélange eau et oxydant située du côté de la première extrémité froide du corps principal 21, dans la bride froide 22, le mélange eau et oxydant parcourant la zone annulaire 31 de la première extrémité froide à la deuxième extrémité chaude du tube interne 23, avant de pénétrer dans la zone intérieure réactionnelle 30 du tube interne par le bais d'au moins une ouverture 36 ;
- une sortie 29 des effluents située au niveau de la première extrémité froide du corps principal 21, dans la bride froide 22 ;
- un moyen d'injection pour injecter la matière à traiter dans le tube interne à partir de l'alimentation en déchets 28 situé dans la bride froide 22.

Selon l'invention, le tube 23 est tournant. Dans le mode de réalisation illustré dans la figure 2, le tube est solidaire de l'arbre 35 et est entrainé en rotation par la rotation de l'arbre 35. Selon un autre mode de réalisation non illustré, le tube, solidaire de l'arbre, pourrait être mis en rotation par un actionneur externe et entrainer en rotation l'arbre.

Le réacteur 20 comprend en outre un fourreau fixe 42 muni d'un alésage dans lequel est logé l'arbre 35.

Selon l'invention, l'agitation permettant le brassage du milieu réactionnel dans la zone réactionnelle 30, c'est-à-dire du mélange eau, oxydant et déchets, depuis le point d'injection des déchets jusqu'au droit du moyen de réfrigération 32 situé dans la zone annulaire 31, est réalisée non pas, comme dans l'art antérieur, par la mise en rotation d'une turbine 4 par rapport au tube interne 3, mais par la mise en rotation du tube interne 23 lui-même par rapport à une surface de la paroi interne du corps principal 21, d'une part, et par rapport à une surface externe du fourreau 42 situé à l'intérieur du tube interne 23, d'autre part. La présence des pales 25 sur l'extrados du tube interne tournant permet en outre d'obtenir une agitation du mélange eau et oxydant dans la zone annulaire 31, agitation qui n'était pas assurée dans l'art antérieur.

Le tube interne 23 tournant doit présenter une bonne résistance aux sollicitations statiques, au flambement, aux flexions et aux torsions. Il est réalisé dans un matériau adapté présentant une résistance déterminée, qui est choisie en fonction des dégâts de corrosion induits par la composition chimique de la matière organique à traiter, ainsi que par la réaction d'OHT ou d'OVH. Le tube interne sera généralement réalisé en titane. En outre, le tube interne a un large diamètre (pour permettre notamment l'insertion, à l'intérieur du tube, des pales 24 et des contre pales 26, 41).

Ce tube 23 tournant est monté de manière étanche sur la bride froide 22 d'interface. Pour réaliser l'étanchéité tournante du tube 23 sur la bride froide 22, on utilise par exemple deux surfaces planes avec un glissement en rotation, surfaces nommées grains 15. L'étanchéité des grains peut être réalisée, par exemple, par un effort de compression ajustable au moyen d'un ressort non représenté sur la figure 2. Le tube 23 tournant permet de mettre en communication fluidique la zone annulaire 31 avec la zone réactionnelle 30 (confinement dynamique de la réaction d'OHT ou d'OVH) au niveau de la partie chaude (zone à température opératoire 38) du réacteur 20. Cette communication fluidique est ici réalisée au moyen de plusieurs ouvertures 36 réalisée dans l'extrémité chaude du tube et dont la fonction est de générer plusieurs jets tournants de mélange eau/air chaud injectés dans la zone réactionnelle. Les jets tournants ont pour fonction d'aider au mélange des réactifs eau/air/solvants, ce qui permet l'initiation et la complétion de la réaction d'OHT ou d'OVH.

Dans la figure 2 est représentée une configuration dans laquelle le tube 23 tournant est entrainé en rotation par la mise en rotation de l'arbre 35, qui est solidaire du tube interne 23 au niveau de l'extrémité chaude du corps principal 21 du réacteur. Au niveau de la bride froide 22, cet arbre 35 tournant est mis en rotation par un dispositif mécanique étanche à la pression opératoire, par exemple en utilisant un entrainement magnétique mû par une motorisation électrique externe (actionneur externe 44). Les volumes intérieur et extérieur du tube interne 23 sont en quasi-équipression du fait de la mise en communication fluidique des volumes au niveau de la zone à température opératoire 38 du réacteur, où le fluide mis en œuvre est par exemple un mélange de solutés dans l'eau supercritique dont la viscosité est faible. Les grains ont donc une étanchéité à réaliser avec un faible gradient de pression, mais pour une pression opératoire hydrostatique pouvant aller de la pression ambiante à des pressions très supérieures à la pression critique de l'eau.

Le tube 23 tournant est pourvu de pales 24 (par exemple des ailettes) qui sont soudées sur son intrados (sa paroi interne) et agencées sur toute la longueur du tube. Des contre pales 26 (par exemples des ailettes) sont soudées sur l'extrados (paroi externe) du fourreau 42 fixe d'injection des déchets. Les pales 24 et les contre pales 26 sont, par exemple, disposées en quinconce. La mise en œuvre d'une agitation au moyen des pales 24 (mises en mouvement par la mise en rotation du tube interne 23), et par la présence des contre pales 26 fixes, permet d'améliorer le cisaillement du fluide agité contenu dans la zone réactionnelle.

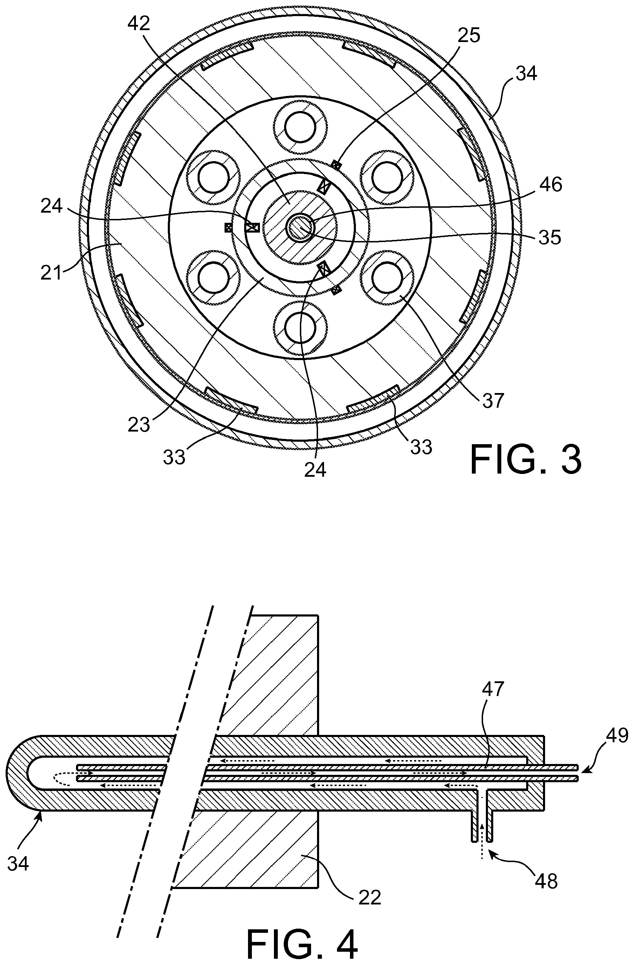

Dans la figure 2, le fourreau fixe 42 est un barreau cylindrique ayant un alésage 45 (lumière) qui permet le passage de l'arbre moteur 35 ; une extrémité du fourreau fixe 42 est solidaire de la bride froide 22 de manière étanche. Comme illustré dans l'agrandissement de la figure 2 ou dans la figure 3, le jeu entre le diamètre de l'alésage du fourreau fixe 42 et le diamètre de l'arbre moteur 35 forme un volume d'injection 46 dans lequel est injecté le déchet froid au niveau de l'entrée de l'alimentation en déchets 28 froids, qui est maintenant située sur la bride froide 22. Ce volume d'injection 46 est continuellement mis en mouvement, indépendamment du débit d'alimentation en déchet, par le déplacement relatif entre la surface de l'arbre moteur 35 et la surface interne du fourreau fixe 42. Comme le déchet est alimenté au niveau de la base de l'arbre dans la bride froide 22, le déchet parcourt donc le volume d'injection 45 depuis l'extrémité froide jusqu'à l'extrémité chaude du réacteur et est progressivement préchauffé par l'échange de chaleur avec le fluide ayant réagi, chaud et issu de la zone réactionnelle 30. En outre, le déchet est maintenu sous agitation dans ce volume d'injection 45, du fait de la présence permanente d'une contrainte de cisaillement entre le fourreau fixe 42 et l'arbre tournant 35. Ce mode d'introduction tolère ainsi la pyrolyse éventuelle du déchet, ainsi que la présence de particules solides en suspension dans le déchet injecté, et limite donc l'accumulation dans cette zone de dépôts ayant tendance à colmater l'injection.

Le fourreau 42 est dimensionné de sorte que son extrémité chaude arrive dans la zone à température opératoire 38 du réacteur 20, mais cette extrémité peut arriver à une distance plus ou moins importante de l'extrémité chaude du tube interne 23. Afin de limiter la flèche entre les deux extrémités du fourreau 42 fixe, l'extrémité chaude du fourreau 42 peut être supportée par un système associé à la fonction d'agitation. En l'occurrence, ce système support comporte une pièce 40 cylindrique munie d'un alésage qui est coaxial avec l'alésage 45 du fourreau fixe 42, la pièce 40 ayant de préférence un diamètre externe identique à celui du fourreau 42; le système support comporte en outre une contre pale fixe 41, qui est solidaire à la fois du fourreau 42 et de la pièce 40.

Cette association de pales tournantes 24 et de contre pales fixes 26, 41 permet d'améliorer, par rapport à la configuration de l'art antérieur illustré dans la figure 1, les conditions d'agitation et de mélange radial dans le volume réactionnel.

Le fourreau fixe 42 peut également être pourvu d'un ou plusieurs disques 43 (seul un disque est représenté dans la figure 2), régulièrement espacés ou non (selon la configuration retenue) le long de l'axe longitudinal du fourreau. Ce ou ces disques permettent de limiter le transfert de masse axial ; le volume réactionnel forme ainsi une succession de réacteurs élémentaires parfaitement agités, dont l'écoulement moyen tend vers l'écoulement piston.

Avantageusement, comme représenté dans la figure 2, le tube interne 23 tournant est en outre pourvu sur son extrados (paroi externe) de pales 25 (par exemple des ailettes), qui sont soudées sur toute sa longueur, les pales 25 étant espacées les unes des autres longitudinalement. Les pales 25, comme les pales 24, sont mises en mouvement par la rotation du tube interne 23. Il est précisé que le dimensionnement radial des pales 24, 25 et des contre pales 26, 41 est adapté en fonction de l'espace disponible. Les pales 25 font face à des éléments (doigts de gants 37 (dont un seul est représenté dans la figure 2) ainsi que, pour certaines, à l'échangeur froid 32) qui constituent des obstacles fixes; elles ont donc une dimension radiale moins grande que les pales 24.

Selon le mode de réalisation illustré dans la figure 3, le réacteur comporte trois ensembles de pales 24 (fixés sur l'intrados du tube interne 23), trois ensembles de pales 25 (fixés sur l'extrados du tube interne 23) et trois ensembles de contre pales 26 (fixés sur l'extrados du fourreau 42 et non représentés dans la figure 3).

Les pales 24 et 25, et les contre pales 26 et 41 participent :
- à l'amélioration du transfert thermique en jouant sur l'hydrodynamique d'écoulement dans la zone annulaire 31 et dans la zone réactionnelle 30 ;
- à l'augmentation de la surface d'échange thermique entre le milieu réactionnel et la zone annulaire 31 par création d'une surface d'échange secondaire.

Au final, le moyen d'agitation amélioré, en association avec le moyen d'introduction amélioré de la matière organique à traiter, permet de disperser rapidement le déchet dans le milieu réactionnel, ce qui conduit à une amélioration de l'efficacité des transferts thermiques (chauffage et refroidissement). Plus particulièrement, le moyen d'agitation amélioré permet, d'une part, d'améliorer le mélange des réactifs tout au long de la zone réactionnelle et donc de s'assurer de l'absence de zones mortes et, d'autre part, d'améliorer les échanges thermiques entre la zone réactionnelle et la zone annulaire, ainsi qu'entre la zone annulaire et les doigts de gants, ce qui permet un meilleur contrôle de la réactivité du milieu et des conditions opératoires locales (limitation des échauffements locaux par exemple).

En outre, contrairement aux configurations de l'art antérieur, l'introduction des déchets ne se fait plus au niveau de l'extrémité chaude du réacteur, mais au niveau de son extrémité froide et à travers la bride froide 22. L'alimentation en déchets 28 est mise en œuvre en interne du réacteur 20 par l'intermédiaire du fourreau fixe d'injection 42, étanche et solidaire de la bride froide 22 du réacteur 20 et débouchant directement dans la zone réactionnelle 30. De même, comme nous le verrons ci-dessous, la prise de température, le refroidissement et la chauffe du réacteur 20 se font par l'intermédiaire de doigts de gant 37. Ainsi, selon le mode de réalisation préféré de l'invention, on a donc supprimé tous les raccords assurant l'étanchéité sous pression du réacteur qui étaient situés à proximité de la zone réactionnelle d'OHT ou sous température, qu'il s'agisse de l'injection ou de l'extraction de fluides ou de prises de mesure (température, pression). On évite ainsi tous risques de faiblesse d'étanchéité au niveau de ces raccords et on améliore la résistance à la contrainte mécanique de ces raccords dans les conditions opératoires.

Dans la figure 2, un seul doigt de gant 37 est représenté. Un doigt de gant 37 est un élément bien connu de l'homme du métier : il s'agit d'un fourreau borgne, formant un logement de protection destiné à recevoir un système qui peut par exemple être un système de chauffage, un système de mesure de la température ou encore un système servant à l'extraction de puissance thermique. La fonction du doigt de gant 37 est de conserver l'étanchéité du réacteur 20 à la pression et à la température opératoires, tout en laissant le système qu'il contient à la pression atmosphérique.

Dans la présente invention, les doigts de gants 37 sont disposés dans la zone annulaire 31 du réacteur 20, parallèles au tube interne 23 de confinement et sont insérés par une ouverture pratiquée dans la bride froide 22 du réacteur.

L'utilisation des doigts de gant 37 pour la préchauffe et le suivi en température est configurable. Il est ainsi possible, à titre d'exemples, de dédier certains doigts de gant à la chauffe, de positionner les zones de chauffe en des endroits spécifiques situés au droit de la zone réactionnelle 30, d'instrumenter le suivi en température le long du réacteur 20 de manière plus ou moins fine, d'ajouter des moyens d'extraction de puissance thermique (échangeurs froids, comme nous le verrons ci-dessous) par le biais d'épingles de refroidissement 47.

Selon un mode de réalisation préféré de l'invention, au moins un des doigts de gant 37 du réacteur 20 est équipé d'un système de chauffe de type cartouche chauffante, par exemple une cartouche chauffante de forte puissance calorifique. On obtient ainsi une injection d'une puissance de chauffe à proximité immédiate de la zone réactionnelle 30. Comme le système de chauffe est inséré à l'extérieur du tube de confinement 23 (et donc hors de la zone réactionnelle 30), il n'est pas exposé aux agressions issues de la réaction d'OHT.

La cartouche chauffante insérée dans un doigt de gant 37 permet :
- la mise en chauffe rapide et le démarrage de la réaction d'OHT à partir d'un réacteur froid ;
- le démarrage de la réaction d'OHT dans des conditions difficiles (solvant à faible PCI), par le chauffage des fluides eau/oxydant avant mélange et initiation de la réaction d'OHT au niveau de la zone réactionnelle 30, dans le cas où les conditions de fonctionnement établies ne permettent pas d'atteindre l'ignition spontanée de la réaction d'OHT de manière stable ;
- le maintien des conditions opératoires minimales de températures requises pour le développement de la réaction d'OVH ou d'OHT attendue dans la zone réactionnelle tout au long de cette zone réactionnelle.

Il est toutefois à noter que l'efficacité de la chauffe repose sur l'efficacité de l'échange de chaleur entre les doigts de gants 37 et le fluide procédé contenu dans la zone annulaire 31, en particulier sur l'agitation forcée qui est mise en œuvre dans la zone annulaire 31.

La technologie des cartouches de chauffe permet de positionner la production de puissance thermique sur certaines longueurs spécifiques du réacteur 20 et d'y associer une prise de température adaptée et une régulation spécifique. Dans ces technologies, les cartouches chauffantes, nommées également crayons chauffants ou résistances cylindriques blindées, peuvent se présenter sous une forme tubulaire de différents diamètres et de longueurs très variées. Les cartouches dissipent des densités de puissance relativement élevées sur tout ou partie de leur longueur totale. Par exemple, ces puissances peuvent atteindre 60 W.cm⁻² pour des températures maximales de l'ordre de 800°C.

Il est possible par exemple d'équiper le réacteur de six doigts de gant 37 et d'insérer trois cartouches de chauffe dans trois des six doigts de gants possibles, afin de délivrer une puissance thermique répartie de manière homogène sur une longueur chaude du réacteur allant au moins de l'échangeur froid 32 (exclu) jusqu'au droit de la zone de mélange déchet/eau/oxydant dans la zone réactionnelle 30. Chaque cartouche peut être pourvue d'un thermocouple pour sa régulation et un thermocouple indépendant permettant de contrôler l'absence de surchauffe du doigt de gant dans lequel il est placé. Les doigts de gant doivent en effet respecter une température limite en fonction du matériau choisi pour les constituer et garantir leurs caractéristiques mécaniques. Par exemple, dans le cas de l'Inconel™ 625, matériau largement utilisé en oxydation hydrothermale, cette température limite est de 700°C.

Un doigt de gant peut également contenir un système de mesure de la température régnant dans la zone 31 qui, du fait de l'agitation, est très représentative du champ de température régnant dans la zone réactionnelle 30.

Selon une variante de réalisation, un des six doigts de gants peut être dédié à la mise en place d'une série de thermocouples placés en faisceau permettant de mesurer la température le long du doigt de gant. De même que pour les cartouches de chauffe, l'insertion du système de mesure de la température dans un doigt de gant permet de dissocier les fonctions du système de mesure que contient le doigt de gant (ici la mesure à distance de la température) et la tenue sous pression dudit système. Ainsi, les thermocouples n'ont pas à être sertis au niveau de la bride froide 22.

L'utilisation d'un faisceau de thermocouples permet d'acquérir de manière simple et très configurable (choix aisé du positionnement des prises de température) un nombre important de points de mesure de température, répartis sur la longueur du réacteur. Ces points de mesure peuvent :
- contribuer au pilotage de la réaction d'OHT ou d'OVH ;
- permettre de surveiller le domaine de fonctionnement en température du réacteur.

La sensibilité de la mesure de la température est essentiellement fonction de la qualité et de la cinétique de l'échange de chaleur entre les doigts de gants 37 et le fluide procédé contenu dans la zone annulaire 31, et en particulier de l'agitation forcée qui est mise en œuvre dans la zone annulaire.

Afin de gérer la puissance dégagée par la réaction d'OHT à des débits d'alimentation en solvant élevés, il est préférable de mettre en place des équipements efficaces de gestion de la chaleur qui permettent de gagner un degré de liberté pour la conduite de ces équipements dans des conditions difficiles (solvant à fort PCI). Les inventeurs ont pour cela choisi d'améliorer les moyens de contrôle de la puissance dégagée par la réaction d'OHT.

On utilise des échangeurs de chaleur formant un radiateur de boucle chaude (également appelé « échangeur chaud ») qui ont pour objectif de récupérer l'excédent de puissance thermique (chaleur) dégagée par la réaction d'OHT vers un circuit externe, ce qui permet d'homogénéiser la température dans la zone réactionnelle 30 et de limiter la température à laquelle est exposé le réacteur 20 sous pression.

Tel que représenté dans la figure 2, l'homogénéité et la limitation de la température sont assurées de deux manières :
- un échangeur de chaleur 33 de type échangeur chaud est inséré dans la paroi externe du corps principal 21 du réacteur 20 de son extrémité froide jusqu'à l'extrémité chaude de l'échangeur froid 32. Cet échangeur de chaleur 33 est réalisé par exemple à partir d'un rainurage réalisé dans la paroi externe du corps principal 21 du réacteur et réalisant des allers/retours successifs selon l'axe longitudinal du réacteur sur la totalité de la surface du réacteur (figure 3), un fluide caloporteur circulant dans la rainure ainsi réalisée ;
- un échangeur de chaleur de type échangeur chaud sous la forme d'une épingle 47, tel que représenté dans la figure 4, qui est inséré dans le réacteur au plus près de la réaction au moyen d'un doigt de gant 37. Un fluide caloporteur est introduit par une entrée de fluide 49 dans l'épingle ; ce fluide circule dans le doigt de gant 37 et ressort par une sortie 48 de fluide. Cet échangeur de chaleur sous la forme d'une épingle 47, situé au droit de la zone réactionnelle dans un ou plusieurs doigts de gant 37, contribue à l'amélioration du contrôle thermique de la réaction d'OHT.

La circulation d'un fluide caloporteur dans ces échangeurs de chaleur permet d'extraire efficacement de la puissance thermique. Le fluide caloporteur utilisé peut être, par exemple, du CO₂ SuperCritique ou bien de l'eau SuperCritique. Cette circulation permet de contrôler la température des équipements du réacteur et du volume réactionnel, afin de piloter la cinétique de réaction d'OHT ou d'OVH en limitant la formation de pyrolyse et en préservant les matériaux éventuellement soumis à des températures extrêmes.

Le débit de la circulation du caloporteur peut être asservi à la température maximale acceptée au niveau de la paroi interne du corps principal 21 du réacteur et relevée dans un doigt de gant de mesure 37. Cette variante n'est pas détaillée.

Quel que soit l'échangeur de chaleur de type échangeur chaud qui est utilisé, il peut être alimenté en fluide caloporteur à débit continu asservi à une mesure de température située au plus près de la réaction. Le fluide caloporteur peut être vaporisé à la pression atmosphérique dans l'échangeur de chaleur ou bien être pressurisé.

On peut en outre utiliser un échangeur de chaleur formant un radiateur de boucle froide (également appelé « échangeur froid »), qui permet le refroidissement en continu des produits de la réaction de combustion avec l'utilisation complémentaire d'un circuit externe d'eau réfrigérée à la pression atmosphérique. Comme illustré dans la figure 2, cette fonction de refroidissement est assurée par un échangeur de chaleur de type échangeur froid 32 qui est compact et qui est inséré dans le réacteur 20 dans la zone annulaire 31 au niveau de l'extrémité froide du réacteur et qui va permettre d'avoir une zone refroidie 39 dans le réacteur. L'échangeur froid 32 est ainsi protégé des agressions de la réaction d'OHT ou d'OVH par le tube de confinement 23. L'insertion de l'échangeur froid 32 au cœur du fluide circulant dans l'espace annulaire 31 permet d'augmenter de manière significative l'efficacité des échanges thermiques et donc de réduire son encombrement, permettant ainsi de maximiser le volume réactionnel. L'efficacité du refroidissement repose néanmoins sur l'efficacité de l'échange de chaleur entre cet échangeur froid 32 et le fluide procédé contenu dans la zone annulaire 31, et en particulier sur l'agitation forcée qui est mise en œuvre dans la zone annulaire.

La fonction principale de l'échangeur froid 32 est d'assurer le refroidissement continu des produits de réaction, à la pression opératoire, à l'aide d'un circuit à pression atmosphérique. Ce composant travaille donc avec une pression extérieure qui est égale à la pression opératoire et une pression intérieure qui est faible. L'insertion de cet échangeur froid 32 dans le corps principal du réacteur implique donc une résistance de ses parois à une contrainte mécanique en compression et non en traction, ce qui permet d'envisager sa réalisation dans un matériau standard et avec des épaisseurs de parois minces, permettant ainsi un transfert de chaleur facilité.

Dans la configuration illustrée dans la figure 2, l'échangeur froid 32 a une forme annulaire et est plaqué contre la paroi interne du corps principal 21 du réacteur au niveau de la bride froide 22. Il comporte en outre des canaux permettant le passage des doigts de gants 37. L'échangeur de chaleur 32 permet donc également de limiter la conduction de chaleur le long des doigts de gants 37 qui le traversent, depuis la zone réactionnelle chaude 30 dans laquelle ils sont immergés jusqu'à la bride froide 22 à laquelle ils sont raccordés de manière étanche.

En choisissant, d'une part, d'implanter du côté froid du réacteur l'ensemble des raccordements sous pression et, d'autre part, d'internaliser les moyens de chauffe, l'espace de l'extrémité chaude du réacteur a été dégagé. La quasi longueur du réacteur peut être entièrement dédiée à la gestion de la température du réacteur. La gestion de la température du réacteur est notamment assurée par l'échangeur de chaleur 33 déjà décrit plus haut, qui est disposé sur la surface extérieure du corps principal du réacteur et dont la fonction est l'extraction de puissance thermique.

Il est acquis qu'une isolation thermique par calorifugeage externe déjà utilisée dans les versions antérieures peut être mise en place. Cependant, ce type d'isolation peut poser des difficultés de manutention en espace confiné et de gestion des déchets.

L'objectif de cette isolation thermique est quadruple :
- limiter les déperditions de chaleur pour permettre l'atteinte des conditions de température de la réaction d'OHT ou d'OVH dans la zone réactionnelle ;
- limiter les déperditions de chaleur pour limiter l'échauffement de l'air en périphérie du réacteur, en particulier lors d'un fonctionnement dans un espace confiné ;
- limiter la température de la paroi externe du corps principal du réacteur à une température acceptable dans certaines conditions d'exploitations contraintes ;
- limiter les déperditions de chaleur pour concentrer l'extraction de puissance par un circuit de caloporteur dédié, pouvant maximiser la valorisation de l'énergie de combustion excédentaire libérée par la réaction d'OHT ou d'OVH.

Comme illustré dans la figure 2, l'isolation thermique du réacteur est encore améliorée par la présence d'une double enveloppe 34, qui a de préférence la forme d'un manchon borgne, délimitant une cavité pour le logement du corps principal du réacteur, solidaire de la bride froide 22. La double enveloppe 34 est maintenue à la pression la plus faible possible, voire à un vide poussé, pour limiter les transferts conductifs et convectifs par l'air en périphérie du réacteur. De préférence, l'intrados de cette enveloppe 34 et l'extrados du corps principal 21 du réacteur sont traités, par exemple, par chromage pour limiter les transferts radiatifs. La double enveloppe 34, une fois installée et mise en dépression, forme un isolant de manière similaire à ce que forme un vase Dewar.

Cette double enveloppe 34 peut être complétée par un refroidissement extérieur (non représenté dans la figure 2), dans le cas où la température de la paroi externe de la double enveloppe serait trop importante ou que la déperdition de chaleur serait trop pénalisante pour le maintien de la température ambiante autour du réacteur. Dans ce dernier cas, l'enveloppe sous vide assure une rupture de pont thermique importante et un simple serpentin métallique fixé à l'extérieur de l'enveloppe permet le maintien des critères demandés par des conditions d'exploitation contraintes.

### REFERENCES CITEES

**[1]** WO 02/30836 A1
**[2]** WO 2007/036526 A2
**[3]** WO 2014/111581 A1
[4] WO 2007/036512 A1

## Revendications

1. Réacteur (20) pour le traitement par oxydation hydrothermale d'une matière organique dans un milieu réactionnel, comprenant :
- un corps principal (21) s'étendant selon un axe longitudinal, étant muni à une première de ses extrémités d'une bride d'interface froide (22), des moyens d'étanchéité étant disposés entre le corps principal (21) et la bride (22) ;
- un tube interne (23) placé à l'intérieur du corps principal (21) de manière à former une zone annulaire (31) le long du corps principal, le tube interne (23) comprenant une première extrémité froide en contact de manière étanche avec la bride froide (22), et une deuxième extrémité chaude, le tube interne délimitant une zone intérieure réactionnelle (30) qui est en communication fluidique avec la zone annulaire (31) par le biais d'au moins une ouverture (36) disposée dans l'extrémité chaude du tube interne ;
- un moyen d'agitation pour réaliser un brassage du milieu réactionnel situé dans la zone intérieure réactionnelle (30) du tube interne (23), ledit moyen d'agitation étant monté rotatif autour de l'axe longitudinal ;
- un moyen de réfrigération pour refroidir un effluent se trouvant dans la zone intérieure réactionnelle du tube interne avant son évacuation du réacteur par une sortie (29) du corps principal ;
- une entrée (27) pour un mélange eau et oxydant située du côté de la première extrémité froide du corps principal (21), le mélange eau et oxydant parcourant la zone annulaire (31) de la première extrémité froide à la deuxième extrémité chaude du tube interne (23), avant de pénétrer dans la zone intérieure réactionnelle (30) du tube interne ;
- une sortie (29) d'effluents située au niveau de la première extrémité froide du corps principal (21) ;
- un moyen d'injection pour injecter la matière organique à traiter dans le tube interne ;
ledit réacteur étant **caractérisé en ce que** le tube interne est monté rotatif sur la bride froide, de manière à être entrainé en rotation autour de l'axe longitudinal ;
**en ce que** le moyen d'injection comporte un fourreau (42), placé à l'intérieur du tube interne (23), ledit fourreau ayant une première extrémité qui est fixée de manière étanche à la bride froide (22) et une deuxième extrémité qui est située à proximité de l'extrémité chaude du tube interne (23), le fourreau (42) ayant en outre un alésage (45) qui définit un passage de la matière organique à traiter de la première extrémité jusqu'à la deuxième extrémité du fourreau ; et
**en ce que** le moyen d'agitation comprend une pluralité de pales (24) fixées sur la paroi interne du tube interne (23) et espacées les unes des autres selon une direction longitudinale du tube interne, les pales étant entrainées en rotation par la rotation du tube interne, et une pluralité de contre pales (26) fixées sur la paroi externe du fourreau (42) et espacées les unes des autres selon une direction longitudinale du fourreau.

2. Réacteur selon la revendication 1, dans lequel le moyen d'agitation comprend en outre un arbre tournant (35) qui est disposé dans la zone intérieure réactionnelle du tube interne et qui traverse la bride froide (22), l'arbre tournant étant logé dans l'alésage (45) du fourreau (42) du moyen d'injection.

3. Réacteur selon la revendication 1 ou la revendication 2, dans lequel le moyen d'agitation comprend en outre une pièce à géométrie annulaire (40) munie d'un alésage, qui est coaxial avec l'alésage du fourreau et qui définit un passage pour l'arbre tournant (35), ainsi qu'une contre pale fixe (41) qui relie la pièce (40) à la deuxième extrémité du fourreau (42).

4. Réacteur selon l'une quelconque des revendications 1 à 3, dans lequel le moyen d'agitation comprend en outre une pluralité de pales (25) fixées sur la paroi externe du tube interne (23) et espacées les unes des autres selon la direction longitudinale du tube interne.

5. Réacteur selon l'une quelconque des revendications 1 à 4, dans lequel le fourreau (42) comporte en outre, sur sa paroi externe, au moins un disque (43) faisant saillie radialement.

6. Réacteur selon l'une quelconque des revendications 1 à 5, dans lequel le moyen de réfrigération comporte un échangeur de chaleur formant un radiateur de boucle froide (32), cet échangeur de chaleur étant disposé dans la zone annulaire (31) à proximité, de préférence en contact, de la bride froide (22).

7. Réacteur selon l'une quelconque des revendications 1 à 6, comprenant en outre une pluralité de doigts de gant (37), disposés dans la zone annulaire (31) et traversant la bride froide (22).

8. Réacteur selon les revendications 6 et 7 prises ensemble, dans lequel l'échangeur de chaleur formant un radiateur de boucle froide (32) est un élément annulaire qui est coaxial avec le tube interne (23) et qui est muni de canaux, chaque canal définissant un passage pour un doigt de gant (37).

9. Réacteur selon l'une quelconque des revendications 1 à 8, comprenant en outre un échangeur de chaleur formant un radiateur de boucle chaude (33), obtenu par une circulation d'un fluide caloporteur au contact de la paroi externe du corps principal (21).

10. Réacteur selon l'une quelconque des revendications 1 à 9, comprenant en outre une double enveloppe (34), qui est maintenue à une pression inférieure ou égale à 300 mbar et qui est disposée autour du corps principal (21) et en contact avec la bride froide (22).

## Patentansprüche

1. Reaktor (20) für die hydrothermale Oxidationsbehandlung von organischem Material in einem Reaktionsmedium, enthaltend:
- einen Hauptkörper (21), der sich entlang einer Längsachse erstreckt und an einem ersten seiner Enden mit einem kalten Schnittstellenflansch (22) versehen ist, wobei Dichtungsmittel zwischen dem Hauptkörper (21) und dem Flansch (22) angeordnet sind;
- ein Innenrohr (23), das im Inneren des Hauptkörpers (21) so angeordnet ist, dass es eine ringförmige Zone (31) entlang des Hauptkörpers bildet, wobei das Innenrohr (23) ein kaltes erstes Ende in abdichtendem Kontakt mit dem kalten Flansch (22) und ein heißes zweites Ende aufweist, wobei das Innenrohr eine innere Reaktionszone (30) begrenzt, die mit der ringförmigen Zone (31) über mindestens eine Öffnung (36) in Fluidverbindung steht, die im heißen Ende des Innenrohrs angeordnet ist;
- eine Rühreinrichtung zum Vermischen des Reaktionsmediums, die sich in der inneren Reaktionszone (30) des Innenrohrs (23) befindet, wobei die Rühreinrichtung um die Längsachse drehbar gelagert ist;
- eine Kühleinrichtung zum Kühlen eines Ablaufs, der sich in der inneren Reaktionszone des Innenrohrs befindet, bevor er durch einen Auslass (29) des Hauptkörpers aus dem Reaktor abgelassen wird;
- einen Einlass (27) für ein Wasser- und Oxidationsmittelgemisch, der sich auf der Seite des kalten ersten Endes des Hauptkörpers (21) befindet, wobei das Wasser- und Oxidationsmittelgemisch die ringförmige Zone (31) vom kalten ersten Ende zum heißen zweiten Ende des Innenrohrs (23) durchströmt, bevor es in die innere Reaktionszone (30) des Innenrohrs eintritt;
- einem Ablaufauslass (29), der sich am kalten ersten Ende des Hauptkörpers (21) befindet;
- eine Einspritzeinrichtung zum Einspritzen des zu behandelnden organischen Materials in das Innenrohr;
wobei der Reaktor **dadurch gekennzeichnet ist, dass**
das Innenrohr an dem kalten Flansch drehbar gelagert ist, so dass es um die Längsachse in Drehung versetzt wird;
dass die Einspritzeinrichtung aus einer Hülle (42) besteht, die im Inneren des Innenrohrs (23) angeordnet ist, wobei die Hülle ein erstes Ende aufweist, das abdichtend am kalten Flansch (22) befestigt ist, sowie ein zweites Ende, das sich in der Nähe des heißen Endes des Innenrohrs (23) befindet, wobei die Hülle (42) ferner eine Bohrung (45) aufweist, die einen Durchgang für das zu behandelnde organische Material vom ersten Ende zum zweiten Ende der Hülle definiert;
und dass die Rühreinrichtung eine Vielzahl von Blättern (24) enthält, die an der Innenwand des Innenrohrs (23) befestigt und entlang einer Längsrichtung des Innenrohrs voneinander beabstandet sind, wobei die Blätter durch die Drehung des Innenrohrs in Drehung versetzt werden, sowie eine Vielzahl von Gegenblättern (26), die an der Außenwand der Hülle (42) befestigt und entlang einer Längsrichtung der Hülse voneinander beabstandet sind.

2. Reaktor nach Anspruch 1,
wobei die Rühreinrichtung ferner eine Drehwelle (35) aufweist, die in der inneren Reaktionszone des Innenrohrs angeordnet ist und die durch den kalten Flansch (22) hindurchgeht, wobei die Drehwelle in der Bohrung (45) der Hülle (42) der Einspritzeinrichtung aufgenommen ist.

3. Reaktor nach Anspruch 1 oder Anspruch 2,
wobei die Rühreinrichtung ferner ein ringförmig ausgebildetes Teil (40) mit einer Bohrung, die koaxial mit der Bohrung der Hülse verläuft und die einen Durchgang für die Drehwelle (35) definiert, sowie ein festes Gegenblatt (41), welches das Teil (40) mit dem zweiten Ende der Hülle (42) verbindet, aufweist.

4. Reaktor nach einem der Ansprüche 1 bis 3,
wobei die Rühreinrichtung ferner eine Vielzahl von Blättern (25) aufweist, die an der Außenwand des Innenrohrs (23) befestigt und in Längsrichtung des Innenrohrs voneinander beabstandet sind.

5. Reaktor nach einem der Ansprüche 1 bis 4,
wobei die Hülle (42) ferner an ihrer Außenwand mindestens eine radial vorstehende Scheibe (43) aufweist.

6. Reaktor nach einem der Ansprüche 1 bis 5,
wobei die Kühleinrichtung einen Wärmetauscher enthält, der einen Kaltkreislaufradiator (32) bildet, wobei dieser Wärmetauscher in der ringförmigen Zone (31) in der Nähe des kalten Flansches (22), vorzugsweise in Kontakt mit diesem, angeordnet ist.

7. Reaktor nach einem der Ansprüche 1 bis 6,
ferner enthaltend eine Vielzahl von Tauchfingern (37), die in der ringförmigen Zone (31) angeordnet sind und durch den kalten Flansch (22) hindurch verlaufen.

8. Reaktor nach den Ansprüchen 6 und 7 zusammengenommen,
wobei der Wärmetauscher, der einen Kaltkreislaufradiator (32) bildet, ein ringförmiges Element ist, das koaxial zum Innenrohr (23) verläuft und mit Kanälen versehen ist, wobei jeder Kanal einen Durchgang für einen Tauchfinger (37) definiert.

9. Reaktor nach einem der Ansprüche 1 bis 8,
ferner enthaltend einen Wärmetauscher, der einen Heißkreislaufradiator (33) bildet, der mittels Zirkulation eines Wärmeträgerfluids in Kontakt mit der Außenwand des Hauptkörpers (21) erhalten wird.

10. Reaktor nach einem der Ansprüche 1 bis 9,
ferner enthaltend einen Doppelmantel (34), der auf einem Druck von weniger als oder gleich 300 mbar gehalten wird und der um den Hauptkörper (21) herum und in Kontakt mit dem kalten Flansch (22) angeordnet ist.

## Claims

1. A reactor (20) for the hydrothermal oxidation treatment of an organic material in a reaction medium, comprising:
- a main body (21) extending along a longitudinal axis, being provided at a first one of its ends with a cold interface flange (22), sealing means being disposed between the main body (21) and the flange (22);
- an inner tube (23) placed inside the main body (21) so as to form an annular zone (31) along the main body, the inner tube (23) comprising a cold first end sealingly contacting with the cold flange (22), and a warm second end, the inner tube delimiting a reaction internal zone (30) which is in fluid communication with the annular zone (31) through at least one aperture (36) disposed in the warm end of the inner tube;
- a stirring means for agitating the reaction mixture located in the reaction internal zone (30) of the inner tube (23), the stirring means being rotatably mounted about the longitudinal axis;
- a refrigerating means for cooling an effluent located in the reaction internal zone of the inner tube before being discharged from the reactor through an outlet (29) of the main body;
- an inlet (27) for a water-oxidant mixture located on the side of the cold first end of the main body (21), the water-oxidant mixture running through the annular zone (31) from the cold first end to the warm second end of the inner tube (23), before penetrating the reaction internal zone (30) of the inner tube;
- an effluent outlet (29) located at the cold first end of the main body (21);
- an injection means for injecting the organic material to be treated in the inner tube;
the reactor being **characterised in that** the inner tube is rotatably mounted to the cold flange, so as to be rotatably driven about the longitudinal axis;
**in that** the injection means includes a sleeve (42), placed inside the inner tube (23), the sleeve having a first end which is sealingly attached to the cold flange (22) and a second end which is located in the proximity of the warm end of the inner tube (23), the sleeve (42) further having a bore (45) which defines a passageway of the organic material to be treated from the first end to the second end of the sleeve; and
**in that** the stirring means comprises a plurality of blades (24) attached to the inner wall of the inner tube (23) and spaced apart from each other along a longitudinal direction of the inner tube, the blades being rotatably driven by the rotation of the inner tube, and a plurality of counter-blades (26) attached to the outer wall of the sleeve (42) and spaced apart from each other along a longitudinal direction of the sleeve.

2. The reactor according to claim 1, wherein the stirring means further comprises a rotating shaft (35) which is disposed in the reaction internal zone of the inner tube and which passes through the cold flange (22), the rotating shaft being housed in the bore (45) of the sleeve (42) of the injection means.

3. The reactor according to claim 1 or claim 2, wherein the stirring means further comprises an annular geometry piece (40) provided with a bore, which is coaxial with the bore of the sleeve and which defines a passageway for the rotating shaft (35), as well as a fixed counter-blade (41) which connects the piece (40) to the second end of the sleeve (42).

4. The reactor according to any of claims 1 to 3, wherein the stirring means further comprises a plurality of blades (25) attached to the outer wall of the inner tube (23) and spaced apart from each other along the longitudinal direction of the inner tube.

5. The reactor according to any of claims 1 to 4, wherein the sleeve (42) further includes, on its outer wall, at least one radially projecting disc (43).

6. The reactor according to any of claims 1 to 5, wherein the refrigerating means includes a heat exchanger forming a cold loop radiator (32), this heat exchanger being disposed in the annular zone (31) in the proximity of, preferably contacting with, the cold flange (22).

7. The reactor according to any of claims 1 to 6, further comprising a plurality of glove fingers (37), disposed in the annular zone (31) and passing through the cold flange (22).

8. The reactor according to claims 6 and 7 taken together, wherein the heat exchanger forming a cold loop radiator (32) is an annular element which is coaxial with the inner tube (23) and which is provided with channels, each channel defining a passageway for a glove finger (37).

9. The reactor according to any of claims 1 to 8, further comprising a heat exchanger forming a warm loop radiator (33), obtained by circulating a coolant in contact with the outer wall of the main body (21).

10. The reactor according to any of claims 1 to 9, further comprising a double jacket (34), which is kept at a pressure lower than or equal to 300 mbar and which is disposed about the main body (21) and in contact with the cold flange (22).
